# EUROPÄISCHE PATENTANMELDUNG

(11) **EP 4 530 395 A2**
(43) Veröffentlichungstag der Anmeldung: **02.04.2025**
(21) Anmeldenummer: 23075004.4
(22) Anmeldetag: 22.09.2023
(51) Int. Cl.: D21H 27/20, E04F 13/04

(54) **TAPETENPFLASTER UND ANORDNUNG MINDESTENS EINES TAPETENPFLASTERS AUF EINEM TRÄGERPAPIER**

(30) Priorität: 23.09.2022 DE 202022105354 U
(71) Anmelder: Müller, Axel, 51377 Leverkusen (DE)
(72) Erfinder: Müller, Axel, 51377 Leverkusen (DE)
(74) Vertreter: Patentanwälte Bauer Vorberg Kayser

(57) **Zusammenfassung**

Die Erfindung betrifft ein Tapetenpflaster (1) zur Ausbesserung einer Strukturtapete, insbesondere einer Raufasertapete, wobei das Tapetenpflaster (1) eine Papierlage (2) umfasst, wobei die Papierlage (2) eine Prägung (3) aufweist, welche die Struktur einer Strukturtapete, insbesondere einer Raufasertapete, nachbildet.

## Beschreibung

Die Erfindung betrifft ein eine Papierlage aufweisendes Tapetenpflaster, zur Ausbesserung einer Raufasertapete.

Strukturtapeten, insbesondere Raufasertapeten, sind ein weit verbreiteter Wandbelag. Bei Raufasertapeten ist eine Struktur durch Einarbeiten von Holzfasern in bzw. zwischen mindestens zwei Papierlagen gebildet. Mit dem Begriff "Struktur" ist im Rahmen dieser Druckschrift insbesondere eine Oberflächenstruktur gemeint.

Bei einer Beschädigung einer Strukturtapete ist deren Struktur nicht ohne weiteres nachbildbar, da ein Verspachteln zu glatt ist und ein Übertapezieren mit einem Stück gleicher Tapete zu unerwünscht sichtbaren Rändern des Tapetenstücks führt.

Aus der DE 20 2014 104 094 U1 ist bereits ein Raufasertapetenabschnitt bzw. ein Tapetenpflaster zur Reparatur einer Raufasertapete bekannt. Bei diesem ist ein Rand gegenüber einem mittigen Bereich dünner ausgebildet und unregelmäßig ausgefasert beschnitten.

Ein Nachteil von bekannten Tapetenreparaturvorrichtungen liegt darin, dass sie kein wünschenswert gutes Reparaturergebnis liefern bzw. dass sie aufwändig herzustellen und/oder schwierig handzuhaben sind.

Aufgabe der Erfindung ist es, eine Tapetenreparaturvorrichtung bzw. ein Tapetenpflaster der vorbekannten Art dahingehend weiterzuentwickeln, dass sie bzw. es hinsichtlich zumindest eines der genannten Nachteile verbessert ist.

Diese Aufgabe wird durch das in Anspruch 1 wiedergegebene Tapetenpflaster gelöst.

Ein erfinderisches Tapetenpflaster zur Ausbesserung einer Strukturtapete, insbesondere einer Raufasertapete, umfasst eine Papierlage. Die Papierlage weist eine Prägung auf, welche die Struktur einer Strukturtapete, insbesondere einer Raufasertapete, nachbildet.

Auf diese Weise kann ein Tapetenpflaster erzielt werden, das die Struktur der Strukturtapete nachbildet und das eine derart geringe Dicke aufweisen kann, dass hierdurch auf einfache Art und Weise eine Voraussetzung dafür geschaffen ist, dass die Ränder des Tapetenpflasters nach Anbringen auf der Strukturtapete nicht oder kaum sichtbar sind. Das Tapetenpflaster kann bevorzugt auch als Tapetenflicken bezeichnet werden.

Auszubessernde Strukturtapeten sind meist bereits mehrfach überstrichen, wodurch ihre Struktur verglichen mit einer nicht überstrichenen Strukturtapete weniger schroff ist. Es hat sich gezeigt, dass eine Prägung sehr gut geeignet ist, um die Struktur einer mehrfach überstrichenen Strukturtapete, insbesondere Raufasertapete, nachzubilden. Zudem hat sich gezeigt, dass ein Tapetenpflaster, bei welchem die Papierlage eine Prägung aufweist, welche die Struktur einer Strukturtapete nachbildet, dünner sein kann als beispielsweise ein Tapetenpflaster, bei dem die Struktur wie bei einer Raufasertapete mit Hilfe von Holzfasern definiert ist. Hierdurch können seine Ränder, nach dem Anbringen optisch weniger oder garnichtmehr auffallen.

Die Prägung kann durch ein Druckumformen herstellbar sein. Die Prägung kann bei feuchter Papierlage bewirkt sein. Die Prägung kann mittels Eindrücken eines Umformwerkzeugs, z. B. eines Stempels in die Papierlage hergestellt sein. Vorzugsweise umfasst die Prägung eine insbesondere plastische Verformung der Papierlage. Vorzugsweise umfasst die Prägung ein Relief bzw. eine Struktur.

Bevorzugt ist das Tapetenpflaster überstreichbar. Durch die Prägung ist vorzugsweise gewährleistet, dass auch nach einem Überstreichen die Struktur einer Strukturtapete nachgebildet bleibt.

Die Fläche des Tapetenpflasters kann größer sein als 1 cm² und kleiner als 100 cm².

Bevorzugt ist die Papierlage aus Fasern gebildet. Die Fasern sind vorzugsweise pflanzlicher Herkunft. In einer Ausgestaltung sind alle Fasern der Papierlage pflanzlicher Herkunft. Alternativ können einige oder alle Fasern der Papierlage zumindest teilweise künstlicher Herkunft bzw. synthetisch sein. Einige oder alle Fasern der Papierlage können Kunststoff umfassen oder aus Kunststoff gebildet sein. Wie dies für eine Papierlage üblich ist, sind die Fasern bevorzugt nicht verwebt. In einer weiten Verwendung des Begriffes Papierlage, umfasst dieser im Rahmen dieser Druckschrift auch eine Lage bzw. ein flächiges Gebilde aus verwebten Fasern.

Bevorzugt bildet die Prägung eine Struktur der Papierlage. Die Prägung kann Vorsprünge umfassen. Die Vorsprünge können auf der Sichtseite der Papierlage angeordnet sein bzw. von der Sichtseite der Papierlage hervorstehen. Die Sichtseite ist insbesondere die nach dem Anbringen des Tapetenpflasters an einer Wand oder Decke dem Nutzer zugewandte Seite. Die Sichtseite ist insbesondere die einer Klebstoffschicht des Tapetenpflasters abgewandte Seite. Die Prägung kann Vertiefungen umfassen. Die Vertiefungen können auf der Unterseite der Papierlage angeordnet sein. Die Unterseite ist bevorzugt die der Sichtseite gegenüberliegende Seite. Die Vertiefungen können deckungsgleich mit den Vorsprüngen, gegenüberliegend zu diesen, angeordnet sein. Die Vorsprünge und die Vertiefungen können eine zumindest in etwa zueinander korrespondierende Form aufweisen. Wenn die Prägung Vorsprünge und Vertiefungen umfasst, dann kann bei geringer Dicke der Papierlage eine große Prägehöhe erzielbar sein.

Bevorzugt ist die Papierlage im Bereich der Prägung also über ihre gesamte Dicke verformt. Vorzugsweise sind die Vorsprünge und die Vertiefungen das Ergebnis derselben Verformung. Verglichen mit einer Prägung, die sich nur über einen Teil der Dicke erstreckt, also eine Seite der Papierlage unverändert lässt, kann auf diese Weise eine weiter aus der Papierlage hervorstehende Prägung, können also höhere Vorsprünge erzielt werden. Hierdurch kann auch eine schroffe Struktur, z. B. einer Raufasertapete, nachgebildet werden, bei weiterhin geringer Dicke des Tapetenpflasters bzw. der Papierlage. Es hat sich gezeigt, dass hiermit verbundene etwaige Nachteile, nämlich das mögliche Wegfallen einer für die Verklebung vorteilhaften durchgehend ebenen Unterseite der Papierlage bzw. des Tapetenpflasters, durch diesen Vorteil überkompensierbar oder vermeidbar sind.

In einer bevorzugten Ausführungsvariante ist die Struktur des Tapetenpflasters ausschließlich durch die Prägung definiert. Bevorzugt umfasst das Tapetenpflaster, anders als eine Raufasertapete, keine strukturbildenden Fasern, z. B. Holzfasern.

Die Prägung kann durch das Drücken eines Umformwerkzeugs auf die Unterseite der ebenen Papierlage bewirkt sein.

Wenn die Höhe mindestens eines der Vorsprünge der Prägung mehr als 10 %, 50 % oder 100 % der Dicke der Papierlage beträgt, dann kann auch eine hohe bzw. schroffe Struktur nachgebildet sein, bei geringer Dicke der Papierlage.

Bevorzugt ist die Höhe des höchsten Vorsprungs der Prägung geringer als die zweifache, fünffache, zehnfache oder fünfzigfache Dicke der Papierlage.

Wenn die Höhe des höchsten Vorsprungs der Prägung geringer als die zweifache oder fünffache Dicke der Papierlage ist, dann ist die Gefahr einer Beschädigung der Papierlage bei dem Prägen reduziert. Es hat sich gezeigt, dass die hiermit verbundenen Einschränkungen verschmerzbar sind, da die Vorsprünge nicht so hoch sein müssen, wie die Struktur der Strukturtapete, die nachgebildet wird. Denn die Struktur von Strukturtapeten, insbesondere Raufasertapeten, ist oft unregelmäßig und kleinere Bereiche mit niedrigeren Vorsprüngen fallen, anders als Bereiche ohne Vorsprünge, nicht auf.

Wenn das Tapetenpflaster einlagig ist, also genau eine Papierlage aufweist, dann ist erneut eine Voraussetzung für ein dünnes Tapetenpflaster geschaffen, dessen Rand nach dem Anbringen optisch unauffällig sein kann.

Wenn die flächenbezogene Masse der Papierlage zwischen 25 g/m² und 60 g/m² liegt und bevorzugt in etwa 40 g/m² beträgt, dann kann ein guter Kompromiss geschaffen sein zwischen ausreichender Steifigkeit und Belastbarkeit des Tapetenpflasters, insbesondere für das Anbringen, und optisch unauffälligen Rändern.

Bevorzugt liegt die Dicke der Papierlage zwischen 10 µm und 100 µm oder zwischen 10 µm und 500 µm und insbesondere zwischen 30 und 70 µm.

Die Papierlage kann bevorzugt auch als Abdeckpapier bezeichnet werden.

Die Papierlage kann ein Durchschlagpapier sein.

Das Tapetenpflaster weist einen Rand auf. Wenn der Rand des Tapetenpflasters zackenförmig oder wellenförmig ist, dann kann dies eine optische Unauffälligkeit des Randes des Tapetenpflasters nach dem Anbringen erneut unterstützen.

Bevorzugt ist der Rand des Tapetenpflasters regelmäßig ausgebildet. Hierdurch kann das Anbringen des Tapetenpflasters erleichtert sein, da besonders schmale Zacken oder Wellen, bei denen die Gefahr eines Abknickens bei dem Anbringen erhöht sein kann, vermieden sein können. Die Wellenform kann Wellentäler und Wellenberge aufweisen, die den gleichen Krümmungsradius aufweisen können. Eine besonders gute optische Unauffälligkeit des Randes kann erzielbar sein, wenn die Wellenberge einen größeren Krümmungsradius aufweisen als die Wellentäler. Die Wellentäler können spitz ausgebildet sein.

Die Grundform des Umrisses des Tapetenpflasters, ohne Berücksichtigung eines etwaigen zackenförmigen oder wellenförmigen Randes, kann vieleckig sein, z. B. quadratisch. Alternativ kann sie rundlich sein, z. B. oval bzw. kreisrund.

Das Tapetenpflaster kann durch Ausstanzen oder Ausschneiden aus einer ausgebreiteten Papierlage herstellbar sein. Der Rand kann glatte Schnittkanten aufweisen, insbesondere also nicht ausgefasert sein. Hierdurch kann erneut die Herstellbarkeit und/oder das Anbringen des Tapetenpflasters erleichtert sein.

Der Rand kann prägungsfrei sein. Alternativ erstreckt sich die Prägung bis in den Rand. Hierdurch kann durch das plötzliche Enden eines Vorsprungs der Prägung am Rand auf einfache Art und Weise eine schroffe Prägung erreicht werden.

Wenn das Tapetenpflaster eine Klebstoffschicht, insbesondere auf der Unterseite der Papierlage, aufweist, dann ist erneut eine Voraussetzung für eine einfache Anbringbarkeit des Tapetenpflasters geschaffen. Vorzugsweise ist das Tapetenpflaster mittels der Klebstoffschicht an eine Wand oder Decke anbringbar. Bevorzugt ist die Klebstoffschicht auf derselben Papierlage angeordnet wie die Prägung.

Die Klebstoffschicht kann fabrikmäßig aufgebracht sein. Die Klebstoffschicht kann bevorzugt auch als selbstklebende Beschichtung bezeichnet werden. Die Klebstoffschicht kann druckaktivierbar sein. Die Klebstoffschicht kann einen Haftklebstoff umfassen. Das Tapetenpflaster kann dann bevorzugt auch als Tapetenaufkleber bezeichnet werden. Der Haftklebstoff kann bei Raumtemperatur eine Dauerklebrigkeit aufweisen.

Mehrere oder alle der Vorsprünge der Prägung können eindrückbar sein, bevorzugt elastisch. Mehrere oder alle der Vorsprünge der Prägung können so ausgebildet sein, dass sie unter Einwirkung einer Druckkraft zumindest bereichsweise vollständig eingedrückt werden und bei Wegfall der Druckkraft vorzugsweise in ihre ursprüngliche Form zurückkehren. Die Druckkraft kann der für das Anbringen erforderlichen Druckkraft entsprechen. Bevorzugt erfolgt bei einem Eindrücken eines Vorsprungs gleichzeitig ein Herausdrücken bzw. eine Verkleinerung der zugehörigen Vertiefung der Prägung, vorzugsweise derart, dass zumindest ein Bereich der Vertiefung verschwindet. Es hat sich gezeigt, dass Maßnahmen zur Verhinderung einer Eindrückbarkeit der Vorsprünge nicht zwingend erforderlich sind und zugunsten einer einfachen Herstellbarkeit verzichtbar sind.

Die Klebstoffschicht kann eine gleichmäßige Dicke aufweisen. Die Klebstoffschicht kann vollflächig auf der Unterseite der Papierlage aufgetragen sein, also auch im Bereich etwaiger Vertiefungen. Die gesamte Klebstoffschicht kann eine zumindest in etwa ebene Unterseite aufweisen.

In einer bevorzugten Ausführungsvariante weist die Klebstoffschicht einen ersten Bereich, vorzugsweise genau einen ersten Bereich, mit einer ersten Dicke auf und mindestens einen zweiten Bereich mit einer im Vergleich zur ersten Dicke größeren zweiten Dicke. Bevorzugt ist der erste Bereich zumindest auch im Randbereich des Tapetenpflasters angeordnet. Bevorzugt ist der mindestens eine zweite Bereich im Bereich der Prägung angeordnet. Vorzugsweise füllt die Klebstoffschicht in dem mindestens einen zweiten Bereich die Vertiefungen der Prägung, bzw. gleicht diese aus, vorzugsweise derart, dass die Klebstoffschicht auch im Bereich der Prägung eine zumindest in etwa ebene Unterseite aufweist. Hierdurch kann die Gefahr, dass die Prägung bei dem Anbringen des Tapetenpflasters abgeschwächt wird, indem ihre Vorsprünge eingedrückt und korrespondierend hierzu ihre Vertiefungen herausgedrückt und dieser Zustand durch Verkleben mittels der Klebstoffschicht fixiert wird, reduziert werden. Bevorzugt stimmt die Unterseite der Klebstoffschicht mit der Unterseite des Tapetenpflasters überein.

Die Klebstoffschicht kann im Bereich der Prägung unterbrochen sein. Auch hierdurch kann die Gefahr, dass die Prägung bei dem Anbringen des Tapetenpflasters abgeschwächt wird, und dieser Zustand durch Verkleben mittels der Klebstoffschicht fixiert wird, reduziert sein.

Das Tapetenpflaster bzw. die Papierlage kann, ohne Berücksichtigung einer etwaigen im Bereich der Prägung vorliegenden Dickenänderung, im Bereich des Randes des Tapetenpflasters dünner sein als in dem übrigen Bereich des Tapetenpflasters.

Bevorzugt weist das Tapetenpflaster bzw. die Papierlage, ohne Berücksichtigung einer etwaigen im Bereich der Prägung bewirkten Dickenänderung, eine gleichbleibende Dicke auf. Hierdurch kann die Herstellbarkeit vereinfacht sein. Es hat sich gezeigt, dass eine randseitig abnehmende Dicke, insbesondere aufgrund der durch die Prägung erzielbaren geringen Dicke des Tapetenpflasters bzw. aufgrund des zacken- bzw. wellenförmigen Randes, nicht erforderlich ist. Die gleichbleibende Dicke des Tapetenpflasters entspricht bevorzugt der Summe aus der Dicke der Klebstoffschicht bzw. der ersten Dicke der Klebstoffschicht und der Dicke der Papierlage.

Weiterhin wird die Aufgabe gelöst durch eine Anordnung mindestens eines Tapetenpflasters auf einem Trägerpapier, bei der das Tapetenpflaster nach einem der Ansprüche 1 bis 13 ausgebildet ist.

Das Trägerpapier kann ein Trennmittel, bevorzugt Silikon, umfassen, um ein Ablösen des Tapetenpflasters von dem Trägerpapier vor dem Anbringen an einer Wand oder Decke zu erleichtern.

Wenn die Anordnung verschiedene Tapetenpflaster umfasst, die sich hinsichtlich ihrer Abmessungen oder/und der durch ihre Prägung nachgebildeten Struktur unterscheiden, dann kann ein Nutzer unmittelbar vor dem Anbringen des Tapetenpflasters entscheiden, welche Größe oder/und Struktur besonders gut zu der Art und dem Zustand seiner auszubessernden Strukturtapete passt.

Weitere Merkmale und Vorteile der Erfindung ergeben sich aus der nun folgenden Beschreibung von Ausführungsbeispielen der Erfindung, die nicht einschränkend zu verstehen sind. Hierzu wird Bezug auf die Figuren genommen, in diesen zeigen schematisch
- Figur 1:: eine Frontalansicht eines ersten Ausführungsbeispiels des Tapetenpflasters,
- Figur 2:: eine Querschnittsdarstellung des ersten Ausführungsbeispiels,
- Figur 3:: das Detail III aus Fig. 2,
- Figur 4:: eine Frontalansicht eines zweites Ausführungsbeispiels des Tapetenpflasters,
- Figur 5:: eine Querschnittsdarstellung des zweiten Ausführungsbeispiels,
- Figur 6:: das Detail VI aus Fig. 5,
- Figur 7:: eine Frontalansicht eines Ausführungsbeispiels einer Anordnung.

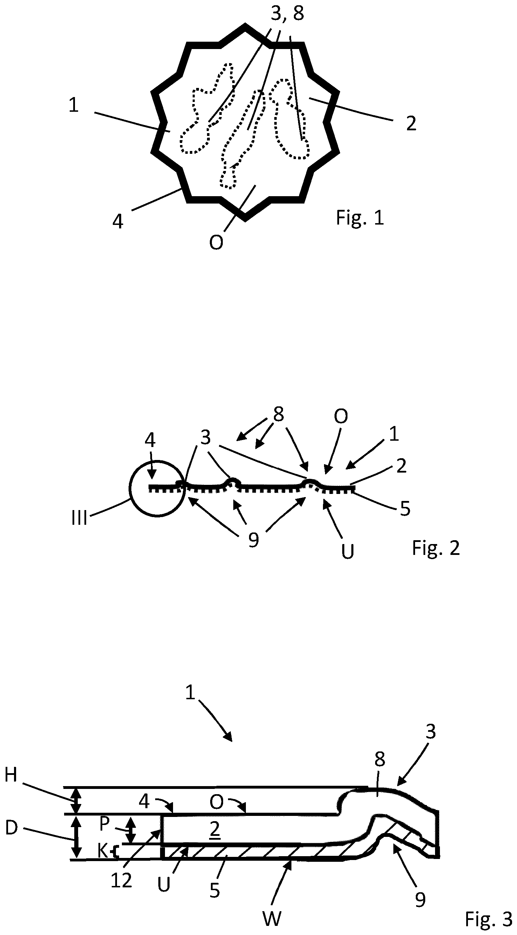

Das in den Fig. 1 bis 3 gezeigte erste Ausführungsbeispiel eines Tapetenpflasters 1 dient zur Ausbesserung einer Strukturtapete, und zwar einer Raufasertapete und umfasst eine Papierlage 2. Die Papierlage 2 weist eine Prägung 3 auf, welche die Struktur der Raufasertapete nachbildet.

Die Papierlage 2 weist eine zumindest nahezu gleichbleibende Dicke P auf und die Nachbildung der Struktur der Strukturtapete erfolgt ausschließlich durch die Prägung bzw. Verformung der Papierlage 2 (siehe Fig. 2 und 3).

Die Prägung 3 ist auf der Sichtseite O der Papierlage 2 sichtbar. Die Prägung 3 umfasst Vorsprünge 8, die von der Sichtseite O der Papierlage 2 hervorstehen und Vertiefungen 9 auf der Unterseite U. Die Vertiefungen 9 sind deckungsgleich mit den Vorsprüngen 8 angeordnet, gegenüberliegend zu den Vorsprüngen 8 (siehe erneut Fig. 2 und 3).

Wie Fig. 3 erkennen lässt, beträgt die Höhe H mindestens eines der Vorsprünge 8 der Prägung 3 mehr als 50 % der Dicke P der Papierlage 2.

Das Tapetenpflaster 1 ist einlagig.

Der Rand 4 des ersten Ausführungsbeispiels des Tapetenpflasters 1 ist regelmäßig und zackenförmig ausgebildet, wie aus Fig. 1 ersichtlich ist.

Die Grundform des Umrisses des Tapetenpflasters, ohne Berücksichtigung des zackenförmigen Randes, ist kreisrund.

Das Tapetenpflaster 1 ist durch Ausstanzen oder Ausschneiden hergestellt. Der Rand 4 weist daher glatte Schnittkanten 12 auf.

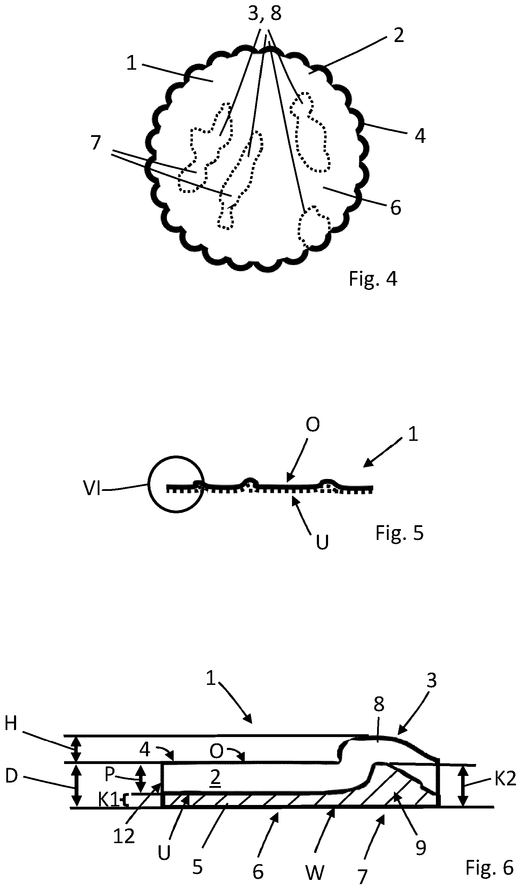

Das Tapetenpflaster 1 weist eine Klebstoffschicht 5 auf der Unterseite U der Papierlage 2 auf, die in Fig. 2 und 5 gepunktet und in den Fig. 3 und 6 schraffiert dargestellt ist.

Wie aus Fig. 3 hervorgeht, weist die Klebstoffschicht 5 des ersten Ausführungsbeispiels eine gleichmäßige Dicke K auf und ist vollflächig auf der Unterseite U der Papierlage 2 aufgetragen, also auch im Bereich der Vertiefungen 9.

Aus den Fig. 2 und 3 geht auch hervor, dass das Tapetenpflaster 1, ohne Berücksichtigung einer im Bereich der Prägung 3 bewirkten Dickenänderung, eine gleichbleibende Dicke D aufweist.

In den Fig. 4 bis 6 ist ein zweites Ausführungsbeispiel eines Tapetenpflasters 1 gezeigt. Gleiche Bezugszeichen bezeichnen gleiche Komponenten. Insoweit wird auf die obige Beschreibung verwiesen. Im Folgenden werden nur die Unterschiede zu dem ersten Ausführungsbeispiel dargelegt.

Wie Fig. 4 zeigt, ist bei dem zweiten Ausführungsbeispiel der Rand 4 des Tapetenpflasters 1 wellenförmig. Die Wellenberge weisen dabei einen größeren Krümmungsradius auf als die spitz ausgebildeten Wellentäler.

Wie aus den Fig. 4 und 6 hervorgeht, weist die Klebstoffschicht 5 bei dem zweiten Ausführungsbeispiel einen ersten Bereich 6 mit einer ersten Dicke K1 auf und mindestens einen zweiten Bereich 7, genauer vier zweiten Bereich 7, mit einer im Vergleich zur ersten Dicke K1 größeren zweiten Dicke K2. Die zweiten Bereiche sind im Bereich der Prägung 3 angeordnet und gleichen die Vertiefungen 9 der Prägung 3 aus. Die Klebstoffschicht 5 weist daher eine im Wesentlichen ebene Unterseite W auf.

Anders als bei dem ersten Ausführungsbeispiel erstreckt sich die Prägung 3 bis in den Rand 4, siehe Fig.4, rechts unten.

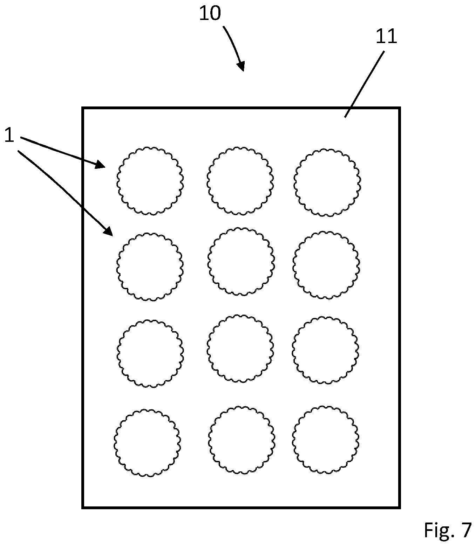

Fig. 7 zeigt ein Ausführungsbeispiel einer Anordnung 10. Zwölf Tapetenpflaster 1 sind auf einem Trägerpapier 11 angeordnet. Die Tapetenpflaster 1 können wie in dem zweiten Ausführungsbeispiel ausgebildet sein.

Das Trägerpapier 11 umfasst ein Trennmittel, nämlich Silikon, um ein Ablösen der Tapetenpflasters 1 von dem Trägerpapier 11, vor dem Anbringen des Tapetenpflasters 1 an einer Wand oder Decke, zu erleichtern.

Der Anmelder behält sich vor, beliebige Merkmale und auch Untermerkmale aus den Ansprüchen und/oder beliebige Merkmale und auch Teilmerkmale aus einem Satz der Beschreibung in beliebiger Art mit anderen Merkmalen, Untermerkmalen oder Teilmerkmalen zu kombinieren, dies auch außerhalb der Merkmale unabhängiger Ansprüche. Der Anmelder behält sich weiterhin vor, beliebige Merkmale und auch Teilmerkmale zu streichen.

### Bezugszeichenliste

- 1: Tapetenpflaster
- 2: Papierlage
- 3: Prägung
- 4: Rand des Tapetenpflasters
- 5: Klebstoffschicht
- 6: erster Bereich der Klebstoffschicht
- 7: zweiter Bereich der Klebstoffschicht
- 8: Vorsprung
- 9: Vertiefung
- 10: Anordnung
- 11: Trägerpapier
- 12: Schnittkante

- D: Dicke des Tapetenpflasters
- H: Höhe der Prägung
- K: Dicke der Klebstoffschicht
- K1: erste Dicke der Klebstoffschicht
- K2: zweite Dicke der Klebstoffschicht
- O: Sichtseite der Papierlage
- P: Dicke der Papierlage
- U: Unterseite der Papierlage
- W: Unterseite der Klebstoffschicht

## Patentansprüche

1. Tapetenpflaster (1) zur Ausbesserung einer Strukturtapete, insbesondere einer Raufasertapete, wobei das Tapetenpflaster (1) eine Papierlage (2) umfasst,
**dadurch gekennzeichnet, dass** die Papierlage (2) eine Prägung (3) aufweist, welche die Struktur einer Strukturtapete, insbesondere einer Raufasertapete, nachbildet.

2. Tapetenpflaster nach Anspruch 1, **dadurch gekennzeichnet, dass** die Prägung (3) Vorsprünge (8) und Vertiefungen (9) umfasst.

3. Tapetenpflaster nach Anspruch 2, **dadurch gekennzeichnet, dass** die Höhe (H) mindestens eines der Vorsprünge (8) mehr als 10 % oder 50 % oder 100 % der Dicke (P) der Papierlage (2) beträgt.

4. Tapetenpflaster nach einem der vorangegangenen Ansprüche, **dadurch gekennzeichnet, dass** das Tapetenpflaster (1) genau eine Papierlage (2) aufweist.

5. Tapetenpflaster nach einem der vorangegangenen Ansprüche, **dadurch gekennzeichnet, dass** die flächenbezogene Masse der Papierlage (2) zwischen 25 g/m² und 60 g/m² liegt und bevorzugt in etwa 40 g/m² beträgt.

6. Tapetenpflaster nach einem der vorangegangenen Ansprüche, **dadurch gekennzeichnet, dass** das Tapetenpflaster (1) einen Rand (4) aufweist, und der Rand (4) zackenförmig oder wellenförmig ist.

7. Tapetenpflaster nach einem der vorangegangenen Ansprüche, **dadurch gekennzeichnet, dass** das Tapetenpflaster (1) einen Rand (4) aufweist, und der Rand (4) regelmäßig ausgebildet ist.

8. Tapetenpflaster nach einem der vorangegangenen Ansprüche, **dadurch gekennzeichnet, dass** das Tapetenpflaster (1) einen Rand (4) aufweist, und der Rand (4) durch Ausstanzen oder Ausschneiden gebildete glatte Schnittkanten (12) aufweist.

9. Tapetenpflaster nach einem der vorangegangenen Ansprüche, **dadurch gekennzeichnet, dass** das Tapetenpflaster (1) eine Klebstoffschicht (5) aufweist.

10. Tapetenpflaster nach Anspruch 9, **dadurch gekennzeichnet, dass** die Klebstoffschicht (5) einen Haftklebstoff umfasst.

11. Tapetenpflaster nach Anspruch 9 oder 10, **dadurch gekennzeichnet, dass** die Klebstoffschicht (5) einen ersten Bereich (6) mit einer ersten Dicke (K1) aufweist und mindestens einen zweiten Bereich (7), mit einer im Vergleich zur ersten Dicke (K1) größeren zweiten Dicke (K2), wobei die Klebstoffschicht (5) in dem mindestens einen zweiten Bereich (7) die Vertiefungen (9) der Prägung (3) ausgleicht.

12. Tapetenpflaster nach Anspruch 9 oder 10, **dadurch gekennzeichnet, dass** die Klebstoffschicht (5) im Bereich der Prägung (3) unterbrochen ist.

13. Tapetenpflaster nach einem der vorangegangenen Ansprüche, **dadurch gekennzeichnet, dass** das Tapetenpflaster (1), ohne Berücksichtigung einer etwaigen im Bereich der Prägung (3) bewirkten Dickenänderung, eine gleichbleibende Dicke (D) aufweist.

14. Anordnung (10) mindestens eines Tapetenpflasters (1) auf einem Trägerpapier (11), **dadurch gekennzeichnet, dass** das Tapetenpflaster (1) nach einem der Ansprüche 1 bis 13 ausgebildet ist.

15. Anordnung nach Anspruch 14, **dadurch gekennzeichnet, dass** das Trägerpapier (11) ein Trennmittel, bevorzugt Silikon, umfasst.

16. Anordnung nach Anspruch 14 oder 15, **dadurch gekennzeichnet, dass** die Anordnung (10) verschiedene Tapetenpflaster (1) umfasst, die sich hinsichtlich der durch ihre Prägung (3) nachgebildeten Struktur unterscheiden.
